# EUROPEAN PATENT APPLICATION

(11) **EP 4 425 831 A1**
(43) Date of publication of application: **04.09.2024**
(21) Application number: 23159881.4
(22) Date of filing: 03.03.2023
(51) Int. Cl.: H04L 9/40, G05B 19/418, H04L 67/12, H04L 67/562, H04L 67/565

(54) **DATA ACCESS IN A CORPORATE NETWORK OF A DISTRIBUTED MANUFACTURING AUTOMATION SYSTEM**

(71) Applicant: BASF SE, 67056 Ludwigshafen am Rhein (DE)
(72) Inventor: Gau, Sebastian, 67061 Ludwigshafen am Rhein (DE)
(74) Representative: BASF IP Association

(57) **Abstract**

The present subject matter relates to a method comprising receiving at a messaging middleware (325) from a first application (321) of the public network (237B) a data access request in a first format; processing by the messaging middleware (325) the data access request, the processing comprising converting the first format of the data access request from into a second format of a second application (306) of a specific corporate network (237A); and sending the data access request in the second format to the second application (306); processing by the second application (306) the data access request resulting in data; sending by the second application (306) the resulting data to the first application (321) through the messaging middleware (325).

## Description

### Technical Field

Various example embodiments relate to automation systems, and more particularly to an apparatus and method for data access in a corporate network in a distributed manufacturing automation system.

### Background

The access to data in a distributed manufacturing automation system may be one of the most important tasks for monitoring the manufacturing processes. However, the data may be vulnerable to unauthorized access, tampering or deletion.

### Summary

Example embodiments provide a method for data enablement in a distributed manufacturing automation system, the distributed manufacturing automation system being configured in accordance with an automation pyramid comprising a plurality of levels, the distributed manufacturing automation system comprising networks, wherein each network is associated with one level of the automation pyramid, the networks comprising a public network and at least one corporate network, the method comprising: receiving at a messaging middleware from a first application of the public network a data access request in a first format; processing by the messaging middleware the data access request, the processing comprising converting the first format of the data access request into a second format of a second application of a specific corporate network of the corporate network; and sending the data access request in the second format to the second application; processing by the second application the data access request resulting in data; sending by the second application the resulting data to the first application through the messaging middleware.

Example embodiments provide a distributed manufacturing automation system being configured as an automation pyramid comprising a plurality of levels, the distributed manufacturing automation system comprising networks, wherein each network is associated with one level of the automation pyramid, the networks comprising a public network and at least one corporate network, the distributed manufacturing automation system comprising a messaging middleware, the messaging middleware being configured for receiving from a first application of the public network a data access request in a first format; converting the first format of the data access request from into a second format of a second application of a specific corporate network of the corporate network; and sending the data access request in the second format to the second application; wherein the second application is configured for processing the data access request resulting in data; and sending the resulting data to the first application through the messaging middleware.

Example embodiments provide a computer program product comprising a computer-readable storage medium having computer-readable program code embodied therewith, the computer-readable program code configured to implement the method of preceding embodiments.

The computer program product may be a computer program. The computer program product may refer to any set of one, or more, storage media (also called "mediums") collectively included in a set of one, or more, storage devices that collectively include machine readable code corresponding to instructions and/or data for performing computer operations specified in the computer program product claim. A "storage device" may be any tangible device that can retain and store instructions for use by a computer processor.

### Brief Description of the Drawings

The accompanying figures are included to provide a further understanding of examples, and are incorporated in and constitute part of this specification. In the figures:
FIG.1 depicts a distributed manufacturing automation system in accordance with an example of the present subject matter;
FIG. 2 depicts a distributed manufacturing automation system in accordance with an example of the present subject matter;
FIG. 3 depicts a computer system for enabling access to data in accordance with an example of the present subject matter;
FIG. 4 depicts a computer system for enabling access to data in accordance with an example of the present subject matter;
FIG. 5 is a flowchart of a method for enabling access to data in accordance with an example of the present subject matter;
FIG. 6 is a flowchart of a method for enabling access to data in accordance with an example of the present subject matter;
FIG. 7 is a computer system in accordance with an example of the present subject matter.

### Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

Automation, in the context of manufacturing, may refer to the use of devices such as sensors, actuators, robots and computers to automate manufacturing processes. The manufacturing process may, for example, refer to the steps of a method used to prepare a composition. The manufacturing process may be a production of biochemicals or chemicals such as solvents, amines, resins, glues, electronic-grade chemicals, industrial gases, basic petrochemicals, and inorganic chemicals. The manufacturing process may involve the use of manufacturing facilities such as equipment, raw materials, machinery, tools, plant etc. The manufacturing process may have one or more properties (herein referred to as manufacturing properties). Examples of manufacturing properties may comprise the temperature, the pressure, the process time, the melting point of a substance, the flexural strength of a steel, the resistance of an electrical conductor etc. The manufacturing process may have one or more parameters (herein referred to as manufacturing parameters) that enable control of the manufacturing process. Examples of manufacturing parameters may comprise mixing rate, temperature etc. Automation, and thus control, of the manufacturing process may be performed by acquiring process data, analysing the process data and automatically adjusting a manufacturing parameter based on the analysis. The process data may comprise values of one or more manufacturing properties of the manufacturing process. Different types of control may be provided depending on the acquired process data and/or type of the analysis and/or type of controlled manufacturing parameters. For example, one type of control may check property values against thresholds and adapt one or more manufacturing parameters accordingly. Another type of control may perform a more sophisticated (time consuming) analysis of the manufacturing property in order to adjust one or more manufacturing parameters. The different types of control may have different time frames of the control e.g., the control may be real-time or non-real time control. Each type of control of the manufacturing process may have a respective time frame within which the control of the manufacturing process may have to be performed.

The control of the manufacturing process may advantageously be performed by a distributed manufacturing automation system. The distributed manufacturing automation system may comprise dispersed manufacturing facilities and various devices which may be spread across multiple systems located in different locations. The distributed manufacturing automation system may be implemented in accordance with a functional model in order to enable the different types of control of the manufacturing process. The functional model may define a function of individual devices, how data is exchanged and formatted within the distributed manufacturing automation system, and how the devices are interconnected within the distributed manufacturing automation system. In one example, the functional model may be the ISA-95 functional model. The functional model may, for example, be a hierarchical pyramidal model.

The distributed manufacturing automation system being configured as an automation pyramid means that the distributed manufacturing automation system is implemented in accordance with a functional model which is a hierarchical pyramidal model. The hierarchical pyramidal model and the automation pyramid may interchangeably be used herein. The hierarchical pyramidal model may define sets of functions to realize specific types of control of the manufacturing process. The function may be performed by one or more devices of the distributed manufacturing automation system. The hierarchical pyramidal model may further define the information flow in the distributed manufacturing automation system, the information flow enabling the sets of functions. For example, the functional model may describe a hierarchical arrangement of devices of the distributed manufacturing automation system according to a field level, control level, supervision level and information level. The field level may be the lowest level which may include field devices such as sensors and actuators. The field devices may be configured to transfer the process data of the manufacturing process to the next higher level for monitoring and analysis. For example, sensors may convert real time manufacturing properties such as temperature and pressure into sensor data. The sensor data may further be transferred to a controller so as to analyse the real time properties. Actuators may convert electrical signals from controllers into mechanical means to control the manufacturing process. The control level may consist of various controllers such as Programmable Logic Controllers (PLCs) which may acquire the manufacturing properties from various sensors. The controllers may drive actuators based on the processed sensor data and control technique. The supervision level may consist of monitoring devices that enable intervening functions, supervising various manufacturing properties, setting production targets, historical archiving, setting machine start and shutdown, etc. The information level may manage the whole distributed manufacturing automation system. The tasks of this level may include production planning, customer and market analysis, orders and sales etc.

The resources of the distributed manufacturing automation system may advantageously be used by organizing them in networks. A network may be a set of nodes using a common communication protocol over interconnections to communicate with each other. The node may be any device of the distributed manufacturing automation system having computer processing capabilities. The node may, for example, be a computer, a field device, a server or a networking hardware. The node may, in another example, be a virtual machine (VM) using physical resources of an underlying system. The node may represent system resources of the distributed manufacturing automation system e.g., the node may be defined by the number of CPU cores, memory capacity, and local file system size that belongs to the node or that are allocated to the node.

The networks may be provided in a hierarchical structure in accordance with the hierarchical pyramidal model. For example, each level of the automation pyramid may comprise one or more networks of nodes that belong to the level. The nodes of each network may be configured to perform a type of control of the manufacturing process. The network may be a public network or a private network depending on the level of the automation pyramid to which the network belongs. For example, the network of the highest level of the automation pyramid may be a public network and the networks of the lower levels (lower than the highest level) may be corporate networks such as private networks. The private network may refer to a network, wherein communication between a device outside the private network to a device inside the private network is controlled by access rules such as firewall rules. The public network may refer to a network, wherein each device of the public network is publicly available.

Hosting services in the public network may be advantageous for many digitalization projects since all benefits of the public network can be used to their full extent for improved features such as scalability, speed, automation etc. The users, for example modelers, can be processing the data using the public network with much higher computational resources and publicly updated software. These hosted services may need access to resources residing within the corporate network in the lower levels. However, due to the various implemented safety measures, establishing connectivity from the public network to the corporate network that fulfil the measures may not be trivial. The present subject matter may solve this issue using a simple and secure mechanism which may enable secure access to data residing in internal systems of the distributed manufacturing automation system.

The data enablement as used herein refers to the provision of access to data to one or more users. This may be advantageous, from a modeler perspective, because data, such as operational technology (OT) production data, of any type may be available from anywhere, at any scale based on data models and formats that are simple to consume. The modeler may be a user. The modeler may, for example, be a user who creates value from production data, e.g., by creating additional insights into inner or future states of a production plant, e.g., to derive the current of future degradation state of production critical assets. The data being available from anywhere may mean that the data is available from the different network locations according to the automation pyramid (e.g., data is available from third level production networks and/or fourth level corporate network and/or the public cloud). The data being available at any scale may mean that any amount of data may be queried, no matter whether its 10 years of raw data from a whole plant or only the average of a hand full of signals over the last 5 minutes. The data of any type may refer the nature of data such as production time series data or production event data e.g., in form of batches. The data of any type may alternatively refer to the age of the data. E.g., the data may be hot data for streaming of real time updates, warm data from recent minutes or days, or cold data from the last years. The data having formats that are simple to consume may refer to data that is provided in a vendor-independent format that is optimally adopted within the industry based on an industry standard.

The present subject matter may provide a first application (*APP*1) in the public network and a second application (*APP*2) in one or more corporate networks. The first application *APP*1 may be installed in a device, of the public network, that comprises processing resources for running the first application *APP*1*.* The second application *APP*2 may be installed in at least one device of the one or more corporate networks, the at least one device comprising processing resources for running the second application *APP*2*.* The one or more corporate networks may, for example, be a corporate network that belongs to the supervision level (third level) of the automation pyramid. In one example, the one or more corporate networks may be a corporate network that belongs to the information level (fourth level) of the automation pyramid.

The first application *APP*1 may comprise instructions that when executed perform a function or task of the first application *APP*1*.* The second application *APP*2 may comprise instructions that when executed perform a function or task of the second application *APP*2*.* The first application *APP*1 may be written in a first programming language and the second application *APP*2 may be written in a second programing language. The first programming language may be the same or different from the second programming language. This flexible choice of programming languages may make use of the messaging middleware which may enable to use same or different programming languages by the first application *APP*1 and the second application *APP*2*.*

The first application *APP*1 may communicate data in accordance with a first messaging protocol. The first messaging protocol may provide data in a first format. The second application *APP*2 may communicate data in accordance with a second messaging protocol. The second messaging protocol may provide data in a second format. The first messaging protocol may be different from the second messaging protocol. Thus, the first format may be different from the second format. Each format of the first format and the second format may, for example, be AVRO, XML, JSON or PROTOBUF format.

The present subject matter may enable communication between the first application *APP*1 and second application *APP*2 using the messaging middleware. The messaging middleware may be configured to transmit/transport and/or translate a message from the first messaging protocol to the second messaging protocol and translate a message from the second messaging protocol to the first messaging protocol[WK1]. The messaging middleware may, for example, be a message Broker. E.g., the messaging middleware may be any one of: Message Query Telemetry Transport (MQTT) broker, Kafka broker, an AZURE Queue and AZURE Event Hub AWS Kine-sis[WK2]. The devices of the public network and of the at least one corporate network may be configured to use the messaging middleware e.g., by exchanging data with the messaging middleware.

The messaging middleware may receive from the first application *APP*1 a data access request (*REQ*) in the first format. The data access request may be a message. The data access request may be a request for data in a corporate network, herein referred to as data source corporate network. The requested data may, for example, be hot data for streaming of real time updates and/or warm data from recent minutes or days, and/or cold data from the last year(s). The different types of data may enable the different types of control of the manufacturing process. The messaging middleware may convert or translate the first format of the data access request into the second format and send the data access request in the second format to the second application *APP*2*.* The second application *APP*2 may process the data access request in the second format in order to obtain requested data from the data source corporate network. The second application *APP*2 may send the obtained requested data (e.g., in the form of messages) in the second format to the messaging middleware. The messaging middleware may translate the obtained requested data into the first format and send the resulting translated data to the first application *APP*1*.*

In one example, the processing of the data access request and the communication of data in accordance with the present subject matter may be performed using an application programming interface (API) model. The API model may be advantageous as it may enable controlled, and thus secure, access to resources of the distributed manufacturing automation system.

In one first example implementation of the API model, the second application *APP*2 may be an API, referred to as *API*_{*APP*2}. The API *API*_{*APP*2} is configured in accordance with a client server model involving a client application, herein referred to as local client application, and a server application. That is, the API *API*_{*APP*2} may be implemented by the local client application and the server application. The API *API*_{*APP*2} enables communication or exchange of data within the corporate network and between the corporate networks. That is, the local client application and the server application may belong to the same corporate network or belong to different corporate networks. For example, the local client application may belong to the corporate network of the fourth level of the automation pyramid and the server application may belong to the corporate network of the third level of the automation pyramid. Alternatively, the local client application and the server application may belong to a same corporate network of the fourth level. The API *API*_{*APP*2} may provide endpoints e.g., in the form of methods, and provide messages that define the arguments and return values of the methods. The local client application may be configured to perform calls of the methods. This may trigger the invocation of the called methods on the server application. The methods may then be executed by the server application. However, the API *API*_{*APP*2} may not be directly accessible by the public network.

The processing of the data access request by the second application *APP*2 may, for example, be performed as follows. Upon receiving the data access request from the messaging middleware, the local client application may invoke one or more methods of the API *API*_{*APP*2}. The application server may execute the invoked one or more methods. This execution may result in at least part of the requested data. The requested data may, for example, be provided as production time series data or production event data in form of batches. The resulting data may be sent by the server application to the local client application. The local client application may send the received resulting data in the second format to the messaging middleware. The messaging middleware may translate the resulting data into the first format and send the resulting translated data to the first application *APP*1*.*

In one second example implementation of the API model, the first application *APP*1 may be provided as an (additional) client application of the API *API*_{*APP*2}*,* herein referred to as remote client application. That is, the API *API*_{*APP*2} may be implemented by the local and remote client applications in association with the server application. This may be advantageous as the data access request *REC* sent by the first application *APP*1 may be compatible with the methods of the API *API*_{*APP*2}. This may, for example, save processing resources for translating e.g., by an adapter, the data access requests of the first application *APP*1 to calls of methods of the API *API*_{*APP*2} .

In one third example implementation of the API model, the first application *APP*1 may be an API, referred to as *API*_{*APP*1}*.* The API *API*_{*APP*1} may provide endpoints e.g., in the form of methods and provide messages that define the arguments and return values of the methods. The methods of the API *API*_{*APP*1} may be compatible with the methods of the API *API*_{*APP*2}. The methods being compatible means that the methods of the API *API*_{*APP*1} may return the same result as respective methods of the API *API*_{*APP*2}. Additionally, the methods of the API *API*_{*APP*1} may have the same arguments as respective methods of the API *API*_{*APP*2}. In one example, the methods of the API *API*_{*APP*1} may be 100% interface-compatible with the methods of the API *API*_{*APP*2.} A user of the public network may, for example, perform calls of the methods of the API *API*_{*APP*1} in order to access specific data in the corporate network(s). For example, the first application *APP*1 may receive a call, first call, of a method of the API *API*_{*APP*1} from the user. The user may refer to an entity e.g., an individual, a group of individuals, a computer, or an application executing on a computer. In response to the first call, the first application *APP*1 may send the data access request *REQ* (representing the first call) to the messaging middleware. The data access request *REQ* may, for example, be a request to execute the called method. The messaging middleware may translate the data access request to the second format and send it to an adapter. The adapter may adapt the first call to perform, using the local client application, a second call of a method of the API *API*_{*APP*2} that corresponds to the first called method of the API *API*_{*APP*1}. The server application may execute the (second) called method and send resulting data to the local client application. The local client application may send the resulting data in the second format to the messaging middleware. The messaging middleware may translate the resulting data into the first format and send the resulting translated data to the first application *APP*1*.*

In one example, the API *API*_{*APP*1} may be implemented as a proxy server. The proxy server may be a server application that acts as an intermediary between the user requesting a resource (e.g., data) and the corporate network providing that resource.

According to the API model, the server application may, for example, provide data as a sequence of messages (responses) and send them in a stream to the requesting client application. The client application may read sequentially the received messages of the stream. Similarly, the local client application or remote client application may provide requests as a sequence of messages and send them in a stream to the server application. The requests and responses may be serialized in various formats such as AVRO, XML, JSON or PROTOBUF format. For example, the requests and responses may be wrapped in a PROTOBUF message prior to being sent to the messaging middleware. The PROTOBUF message may be as follows: 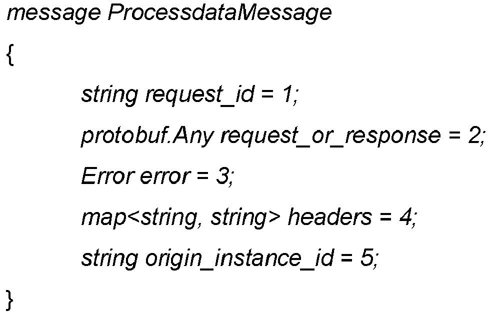 where the request ID may be used to identify which request belongs to which data consumer client.

The present subject matter may further secure access to data of the corporate networks by using a multi-factor authentication, wherein a first factor may enable access to the first application *APP*1 and a second factor may enable access to the second application *APP*2*.* For example, the first factor may be provided to prove membership to a selected set of users. After this step, general access to the first application *APP*1 may be possible. The second factor may be another secret which grants access to the underlying on-prem system of the corporate network.

In one example, the first application *APP*1 may apply a first authentication test to authenticate the user of the data access request, and send the data access request to the messaging middleware only in case the user is successfully authenticated. In case the first authentication test is unsuccessful, the data access request may be rejected by the first application *APP*1*.* The second application *APP*2 may apply a second authentication test to authenticate the user. The second application *APP*2 may perform the processing of the data access request only in case the user is second successfully authenticated. In case the second authentication test is unsuccessful, the data access request may be rejected by the second application *APP*2*.*

In one example, the first application *APP*1 may perform the first authentication test by receiving a first authentication token, wherein the first authentication token comprises information required to pass the first authentication test. The first authentication token may, for example, be obtained by the user or by the first application *APP*1*.* For example, the first application *APP*1 may comprise a first value (e.g., numerical value) and the first authentication token may comprise a second value, wherein the first authentication test may be the difference between the first value and the second value, in which case the first authentication test would be considered to be passed (i.e., successful), if the difference is less than or equal to a predetermined tolerance value. The first authentication token may, for example, further be placed in an authorization header of the data access request *REC.* The authorization header may, for example, be a HTTP authorization request header. The authorization header may be used to provide credentials that authenticate a user allowing access to a protected resource.

After passing the first authentication test, the method comprises a step of receiving a second authentication token, wherein the second authentication token comprises information required to pass the at least one second authentication test. The second authentication token may be acquired by the user or by the first application *APP*1*.* The second authentication token may, for example, be placed in the authorization header of the data access request sent by the first application *APP*1*.* The second application *APP*2 may read the header to obtain the tokens. The second application *APP*2 may authenticate the user using the second authentication token. For example, the second application *APP*2 may comprise a first value (e.g., numerical value) and the second authentication token may comprise a second value, wherein the second authentication test may be the difference between the first value and the second value, in which case the second authentication test would be considered successful, if the difference is less than or equal to a predetermined tolerance value. Optionally, the second application *APP*2 may further authenticate the user using the first authentication token. In this case, the user may be successfully authenticated by the second application *APP*2 if the authentication is successful for both the first authentication token and the second authentication token.

In one example of the API model, the first and second applications *APP*1 and *APP*2 may be implemented using a GOOGLE Remote Procedure Call (gRPC) framework. For example, the first application *APP*1 may be a gRPC API proxy. For example, the client-server model may be provided using the gRPC framework or a Representational state transfer (REST) framework. Using the gRPC framework may be advantageous as it may enable streaming of data from the backend systems.

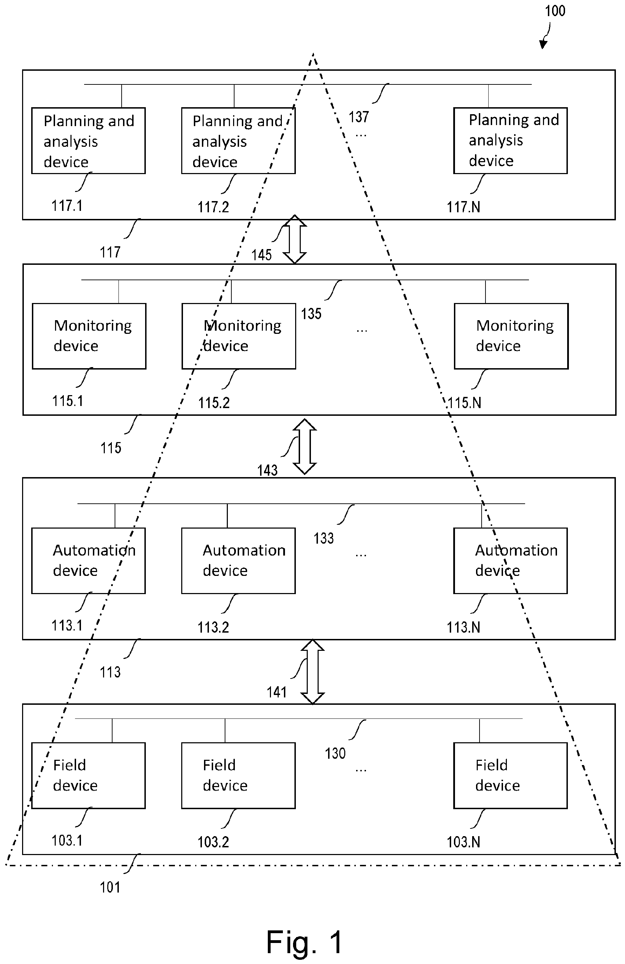

FIG. 1 depicts a distributed manufacturing automation system in accordance with an example of the present subject matter.

As indicted in FIG. 1, the distributed manufacturing automation system 100 is configured according to a hierarchical pyramidal model. The hierarchical pyramid model may be the ISA-95 pyramid model. With this configuration, different groups of devices are connected over respective networks and the data is communicated between the manufacturing facility and the groups of devices following a predefined data flow using specific connections.

The distributed manufacturing automation system 100 is organized in different levels 101, 113, 115 and 117 of the hierarchical pyramidal model. The first level 101 comprises field devices 103.1 through 103.N. The field devices 103.1-N may include sensors, meters, motor drives, industrial robots, vision cameras, actuators or other such field devices. The field devices 103.1-N may be used to monitor and/or control one or more manufacturing processes. The field devices 103.1-N may be configured to transfer the data of the manufacturing process to the second level 113. The field devices 103.1-N may be used to control one or more manufacturing processes. For that, the field devices 103.1-N may be configured to generate and/or collect process data relating to control of the manufacturing process. The field devices 103.1-N may be configured to transfer the process data of the manufacturing process to devices of other levels. For example, the manufacturing parameters of the manufacturing process may be controlled through actuators based on the analysis. The manufacturing process may refer to the steps of a method used to prepare a composition in a manufacturing batch amount. A manufacturing process may, for example, include a joining process and/or shearing and forming process and/or molding process and/or machining process. The manufacturing process may have one or more configurable manufacturing parameters such as mixing rate, temperature etc. Different types of control of the manufacturing process may be used. Each type of control of the manufacturing process may comprise an analysis step for analyzing of one or more manufacturing properties of the manufacturing process and a control step for adjusting one or more manufacturing parameters of the manufacturing process based on the analysis. The manufacturing property of the manufacturing process may, for example, comprise duration, temperature, pressure, speed, quantity etc. The analysis step may comprise monitoring and/or processing of process data of the manufacturing process. The different types of control may differ, for example, in the type of the analysis performed and/or in the required time frame of the control e.g., one or more manufacturing parameters of the manufacturing process may need to be controlled in real-time in order to meet required performance. Each type of control of the manufacturing process may require specific input data. The input data may comprise values of one or more manufacturing properties which may be obtained directly from the acquired process data or be obtained after pre-processing the process data. In addition, each type of control of the manufacturing process may have different processing resource requirement.

The second level 113 comprises automation devices 113.1-N. The automation devices 113.1-N may comprise CNC machines, PLCs, etc. The automation devices 113.1-N may receive the data including manufacturing properties from various sensors and may drive actuators based on the processed sensor signals and program or control technique. The field devices 103.1-N together with the automation devices 113.1-N may form an automation system. Examples of automation systems may include a batch control system, continuous control system, or discrete control system. The third level 115 comprises monitoring devices 115.1-N. The monitoring devices 115.1-N facilitates intervening functions, supervising various manufacturing properties, setting production targets, historical archiving, setting machine start and shutdown, etc. The monitoring devices 115.1-N may, for example, comprise DCS devices or SCADA devices. The fourth level 117 comprises planning and analysis devices (PA devices) 117.1-N. The planning and analysis devices 117.1-N may be configured to perform production planning, customer and market analysis, orders and sales, machine learning etc.

The devices within each level of the distributed manufacturing automation system 100 may be connected with each other over a respective network which is adapted to transmit data with the aid of a standard protocol. For example, the field devices 103.1-N may be connected with each other over a network 130. The automation devices 113.1-N may be connected with each other over a network 133. The monitoring devices 115.1-N may be connected with each other over a network 135. The planning and analysis devices 117.1-N may be connected with each other over a network 137.

The field devices 103.1-N may communicate with the automation devices 113.1-N via a connection 141. The connection 141 may be an analogue connection, field bus based connection or Ethernet based connection. The automation devices 113.1-N may communicate with the monitoring devices 115.1-N via a connection 143. The connection 143 may be an Ethernet based connection. The monitoring devices 115.1-N may communicate with the planning and analysis devices 117.1-N via a connection 145. The connection 145 may be an Ethernet based connection. Each of the connections 141, 143 and 145 may be provided with a firewall that controls the communication of the data through the respective connection.

The devices of the distributed manufacturing automation system 100 may cooperate according to this hierarchical pyramidal model in order to perform different types of control of the manufacturing process. For example, using the system 100, an operating division of a chemical company may monitor its production quality and actively react to product quality issues by automatically generating feedback to the automation system.

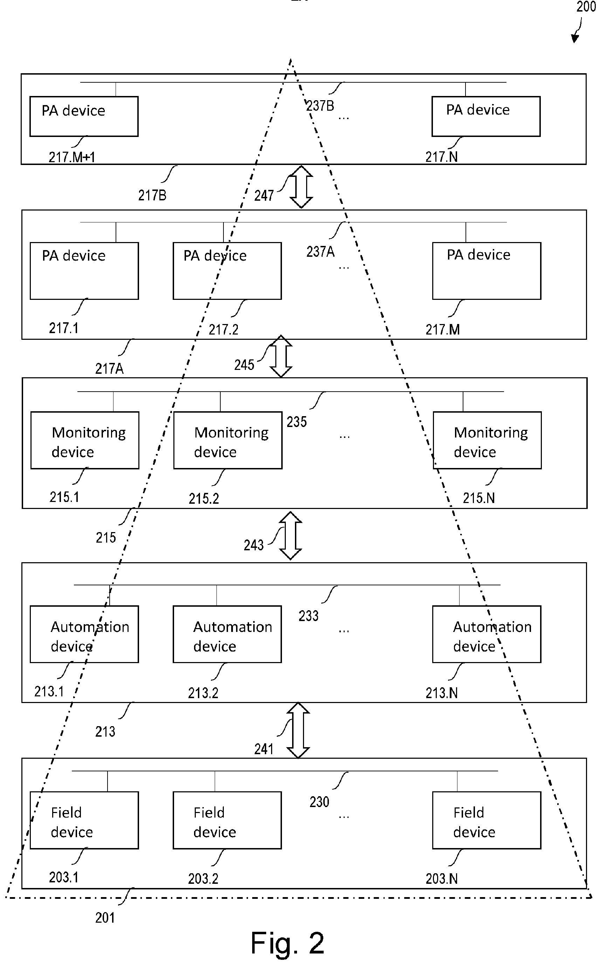

FIG. 2 depicts a distributed manufacturing automation system in accordance with an example of the present subject matter.

As indicted in FIG. 2, the distributed manufacturing automation system 200 is configured according to a hierarchical pyramidal model. The hierarchical pyramid model may be the ISA-95 pyramid model. With this configuration, different groups of devices are connected over respective networks and the data is communicated between the manufacturing facility and the groups of devices following a predefined data flow using specific connections.

The distributed manufacturing automation system 200 is organized in different levels 201, 213, 215, 217A and 217B of the hierarchical pyramidal model. The first level 201 comprises field devices 203.1 through 203.N. The field devices 203.1-N may include sensors, meters, motor drives, industrial robots, vision cameras, actuators or other such field devices. The field devices 203.1-N may be used to monitor and/or control one or more manufacturing processes. The field devices 203.1-N may be configured to generate and/or collect process data relating to control of the manufacturing process. The field devices 203.1-N may be configured to transfer the data of the manufacturing process to the second level 213. The second level 213 comprises automation devices 213.1-N. The automation devices 213.1-N may comprise CNC machines, PLCs, etc. The automation devices 213.1-N may receive the data including manufacturing properties from various sensors and may drive actuators based on the processed sensor signals and program or control technique. The third level 215 comprises monitoring devices 215.1-N. The monitoring devices 215.1-N facilitates intervening functions, supervising various manufacturing properties, setting production targets, historical archiving, setting machine start and shutdown, etc. The monitoring devices 215.1-N may, for example, comprise DCS devices or SCADA devices. The fourth and fifth levels 217A and 217B comprise planning and analysis devices 217.1-N. The planning and analysis devices 217.1-N may be configured to perform production planning, customer and market analysis, orders and sales, machine learning etc. By contrast to the system of FIG. 1, part of the planning and analysis devices 217.M+1-N may be implemented in a cloud platform to leverage cloud-based applications and services. The cloud platform may, for example, be provided by a cloud provider as a platform-as-a-service (PaaS). Hence, a subgroup 217.1 to 217.M of the of PA devices 215 may be implemented as a local data center using the network 237A and the remaining subgroup 217.M+1 to 217.N may be implemented in the cloud platform using a network 237B. The devices in the cloud platform may be configured to communicate through the internet 247 in order to exchange data with other devices of the system 200. The devices of the local data centers as well as the devices of the cloud platform may cooperate in order to perform different types of control of the manufacturing process.

The devices within each level of the distributed manufacturing automation system 200 may be connected with each other over a respective network which is adapted to transmit data with the aid of a standard protocol. For example, the field devices 203.1-N may be connected with each other over a network 230. The automation devices 213.1-N may be connected with each other over a network 233. The monitoring devices 215.1-N may be connected with each other over a network 235. The planning and analysis devices 217.1-M may be connected with each other over a network 237A. The planning and analysis devices 217.M+1-N may be connected with each other over a network 237B.

The field devices 203.1-N may communicate with the automation devices 213.1-N via a connection 241. The connection 241 may be an analogue connection, field bus based connection or Ethernet based connection. The automation devices 213.1-N may communicate with the monitoring devices 215.1-N via a connection 243. The connection 243 may be an Ethernet based connection. The monitoring devices 215.1-N may communicate with the planning and analysis devices 217.1-M via a connection 245. The connection 245 may be an Ethernet based connection. The planning and analysis devices 217.1-M may communicate with the planning and analysis devices 217.M+1-N via a connection 247. The connection 247 may be an internet connection. Each of the connections 241, 243, 245 and 247 may be provided with a firewall that controls the communication of the data through the respective connection.

The devices of the distributed manufacturing automation system 200 may cooperate according to this hierarchical model in order to perform different types of control of the manufacturing process. For example, using the system 200, an operating division of a chemical company may monitor its production quality and actively react to product quality issues by automatically generating feedback to the automation system.

In one example implementation, the system of FIG. 2 may further be provided with a Namur Open Architecture (NOA).

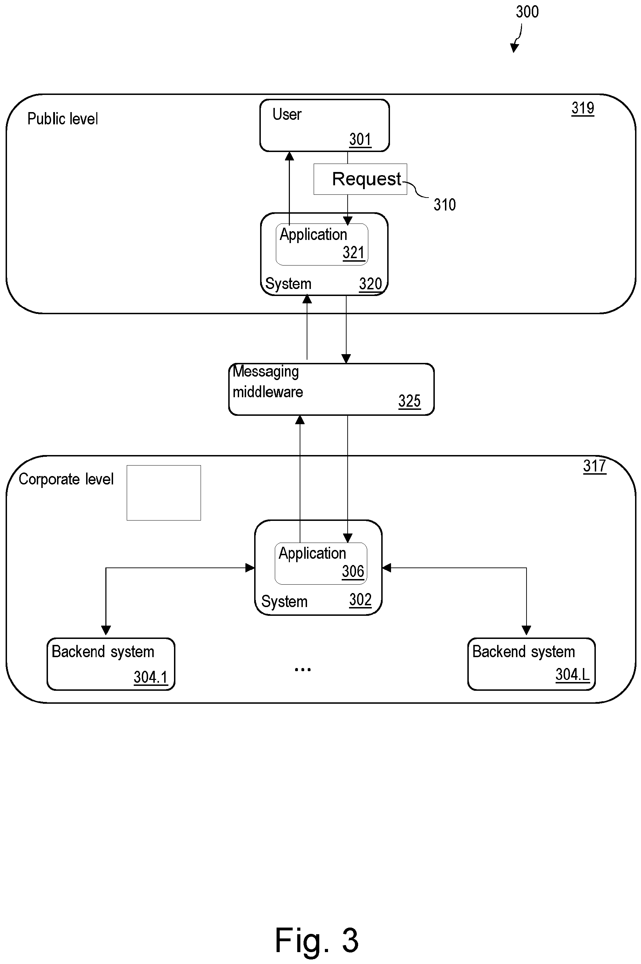

FIG. 3 depicts a computer system for enabling access to data in accordance with an example of the present subject matter.

The computer system 300 comprises a system 320, named public system. The public system 320 may, for example, be part of a given level 319 of the automation pyramid. The level 319 may be referred to as public level. The public level may, for example, be the level 217B of FIG. 2. The public system 320 may, for example, comprise any device of the PA devices of the level 217B which are described with reference to FIG. 2. The public system 320 may comprise an application 321. The application 321 may process data in a first format.

The computer system 300 comprises a system 302, named corporate system, and a set of backend systems 304.1 through 304. L. The corporate system 302 may, for example, be part of a given level 317 of the automation pyramid. The level 317 may be referred to as corporate level. The corporate level may, for example, be a level lower than the level 319. For example, the corporate level 317 may the level 117 or 217A of FIG. 1 and FIG. 2 respectively. The corporate system 302 may, for example, comprise any device of the PA devices which are described with reference to FIG. 1 and FIG. 2. The set of backend systems 304.1 through 304.L may be part of the level 317 or part of a level of the automation pyramid which is different from and lower than the level 317. Each backend system of the set of backend systems 304.1 through 304.L may, for example, comprise any device of the monitoring devices which are described with reference to FIG. 1 and FIG. 2. The corporate system 302 may comprise an application 306. The application 306 may process data in a second format.

The computer system 300 comprises a messaging middleware 325 that is accessible from the corporate and public levels.

For example, a user 301 of the public system 320 may send a data access request 310 to the application 321 for accessing data in the set of backend systems 304.1 through 304. L. The data access request may indicate data to be retrieved from the set of backend systems 304.1 through 304.L. Upon receiving the data access request, the application 321 may send the data access request in a first format to the messaging middleware 325. The messaging middleware 325 may convert or translate the first format of the data access request into the second format and send the data access request in the second format to the application 306 of the corporate system 302. The application 306 may process the data access request in the second format in order to obtain requested data from the data source corporate network. The application 306 may send the obtained requested data (e.gt., in the form of messages) in the second format to the messaging middleware 325. The messaging middleware 325 may translate the requested data into the first format and send it to the application 321.

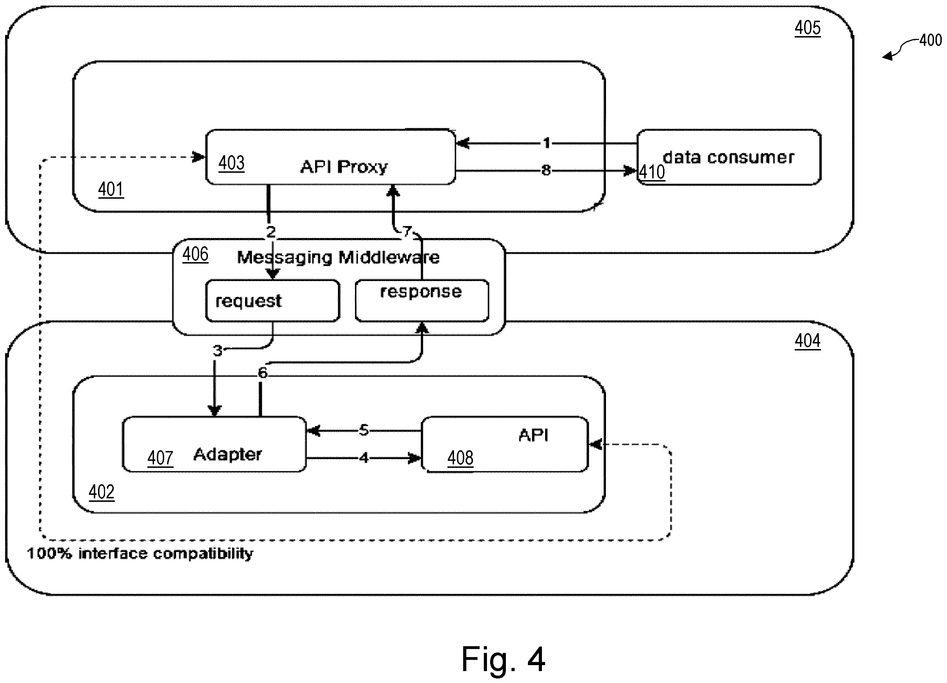

FIG. 4 depicts a computer system for enabling access to data in a distributed manufacturing automation system in accordance with an example of the present subject matter.

The system 400 provides an example for enabling access to data in a distributed manufacturing automation system 200 of FIG. 2. The distributing manufacturing automation system being configured as an automation pyramid comprising a plurality of levels 404 and 405. Here, the fourth level 404 and the fifth level 405 are shown. The fourth level may comprise a corporate network 402 and the fifth level 405 may comprise a public network 401 such as a public cloud. Nodes of the public network may, for example, be organized in a cluster such as a KUBERNETES cluster. Nodes of the corporate network may, for example, be organized in a cluster such as a KUBERNETES cluster. The fifth level 405 comprises an application 403 that is configured to receive, from a user 410 of the application 403, a request in a first format to communicate with another application belonging to the corporate network. The application 403 may be a part of the KUBERNETES cluster, and comprises an API proxy, which is in the form of a gRPC API.

After receiving the request from the user 410, as depicted by the first path 1, the application 403 applies a first authentication test to authenticate the user 410. When the application 403 applies the first authentication test to authenticate the user 410, the application 403 acquires a first authorization token, which is not disclosed in the figures, wherein the first authentication token comprises information required to pass the first authentication test. After the first authentication test of the user 410 is passed, the application 403 may place the received first authentication token in a public authentication header in the request message and send the request message in a first format to the messaging middleware 406, as depicted by the second path 2.

The messaging middleware 406 is an interface between the fifth level 405 comprising the application 403 and the fourth level 404. The messaging middleware 406 converts the request message from the first format into a second format. The messaging middleware 406 forwards the request message to an adapter 407 of the public network 402, as depicted by the third path 3. The adapter 407 and an API 408 may form a second application of the corporate network 402.

After receiving the request message from the messaging middleware 406, the adapter 407 applies a second authentication test to authenticate the user 410 using a second authentication token. The second authentication token may for example be acquired by the application 403, the user 410 or the second application. If acquired by the user or the application 403, the second authentication token may be placed in the header of the request message. The second authentication token comprises information required to pass the second authentication test.

After the second authentication test is passed, the adapter 407 forwards the request message in the second format to a gRPC API 408, as depicted by the fourth path 4. After receiving the request message from the adapter 407, the gRPC API 408 processes the request message and generates a response in the second format from the processing of the request message.

The gRPC API 408 sends the response in the second format to the adapter 407, as depicted by the fifth path 5. The adapter 407 forwards the response message to the messaging middleware 406, as depicted by the sixth path 6.

The messaging middleware 406 then converts the response message from the second format to the first format and forwards the response message in the first format to the application 403, as depicted by the seventh path 7. The application 403 then provides the response message to the user 410, as depicted by the eight path 8.

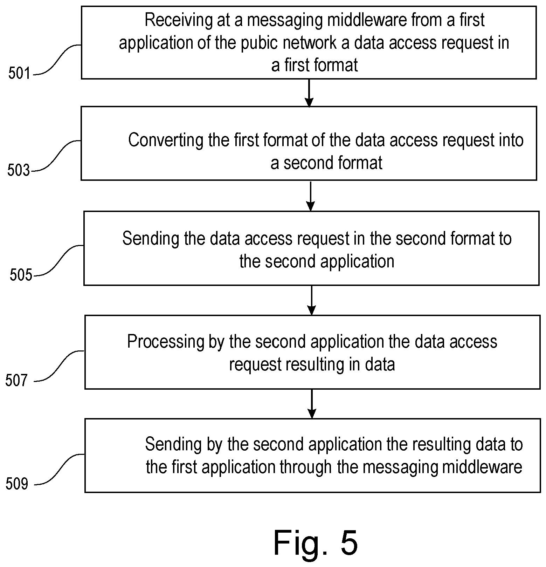

FIG. 5 is a flowchart of a method for enabling access to data in a distributed manufacturing automation system in accordance with an example of the present subject matter. For the purpose of explanation, the method of FIG. 5 may be implemented in the system illustrated in previous FIG. 3, but is not limited to this implementation.

For example, the user 301 of the public system 302 may send a data access request 310 to the application 321 for accessing data in the set of backend systems 304.1 through 304. L. The data access request may indicate data to be retrieved from the set of backend systems 304.1 through 304.L. The indicated data may, for example, be hot data for streaming of real time updates and/or warm data from recent minutes or days, and/or cold data from the last year(s). Upon receiving the data access request, the application 321 may send the data access request in a first format to the messaging middleware 325. Upon receiving in step 501 the data access request from the application 321, the messaging middleware 325 may convert or translate in step 503 the first format of the data access request into the second format and send in step 505 the data access request in the second format to the application 306 of the corporate system 302. The application 306 may process in step 507 the data access request in the second format in order to obtain at least part of the requested data from the data source corporate network. The application 306 may send in step 509 the obtained requested data (e.g., in the form of messages) in the second format to the messaging middleware 325. The messaging middleware 325 may translate the obtained requested data into the first format and send the translated data to the application 321.

The method of FIG. 5 may, for example, be repeated for each further data access request, for accessing data in the set of backend systems 304.1 through 304.L, wherein the data access request is received at the application 321. The method of FIG. 5 may, for example, be performed automatically upon receiving the data access request at the application 321.

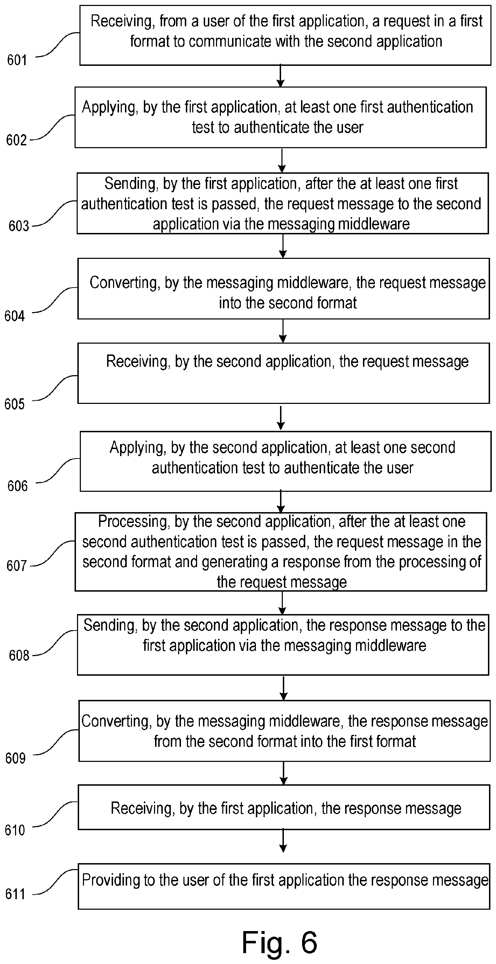

FIG. 6 depicts a flowchart of a method for enabling data in a distributed manufacturing automation system according to an example of the present subject matter.

A method depicted by the flowchart provides an example for enabling data in a distributed manufacturing automation system 400 of FIG. 4. The steps of the method correspond to the functionalities of the system 400 of FIG. 4.

The method comprises a first step 601 of receiving, from a user 410 of the first application 403, a request in a first format to communicate with the second application 407 and 408. Before sending the request, the user 410 may obtain a first authentication token and place the first authentication token in an authorization header of the request. The user may obtain the first authentication token from a token provider e.g., the provider may be the owner of the distributed manufacturing automation system.

The method comprises a second step 602 of applying, by the first application 403, at least one first authentication test to authenticate the user 410. This first authentication test may be performed using the first authentication token.

The method comprises a third step 603 of sending, by the first application 403, after the at least one first authentication test is passed (i.e., successful), the request message to the second application 407 and 408 via the messaging middleware 406. The first application 403 may send in step 603 the request message to the messaging middleware 406 such that the messaging middleware 406 may send the request message to the second application 407 and 408. Before sending the request by the first application 403, the user 410 or the first application 403 may obtain a second authentication token and place the second authentication token in an authorization header of the request. The second authentication token may be obtained from a process data provider service of the corporate network.

The method comprises a fourth step 604 of converting, by the messaging middleware 406, the request message in the second format and sending the request message in the second format to the second application.

The method comprises a fifth step 605 of receiving, by the adapter 407 of the second application, the request message in the second format. The adapter 407 may adapt the request message to the structure of the API 408, e.g., the adapter may call the method(s) of the API 408 that corresponds to the request message.

The method comprises a sixth step 606 of applying, e.g., by the API 408 of the second application, at least one second authentication test to authenticate the user 410. This second authentication test may be performed using the second authentication token.

The method comprises a seventh step 607 of processing, by the API 408 of the second application, after the at least one second authentication test is passed, the request message in the second format and generating a response from the processing of the request message, wherein the response is in the second format. For example, the API 408 may execute in step 607 the called method(s) in order to obtain requested data which is provided as the response.

The method comprises an eighth step 608 of sending, by the second application, the response message to the first application 403 via the messaging middleware 406. For example, the API 408 may send the response to the adapter 407, and the adapter 407 may send the response message to the messaging middleware 406 such that the messaging middleware 406 may send the response message to the first application 403.

The method comprises a ninth step 609 of converting, by the messaging middleware 406, the response message from the second format into the first format and sending the response message in the first format to the first application 403.

The method comprises a tenth step 610 of receiving, by the first application 403, the response message.

The method comprises an eleventh step 611 of providing to the user 410 of the first application 403 the response message.

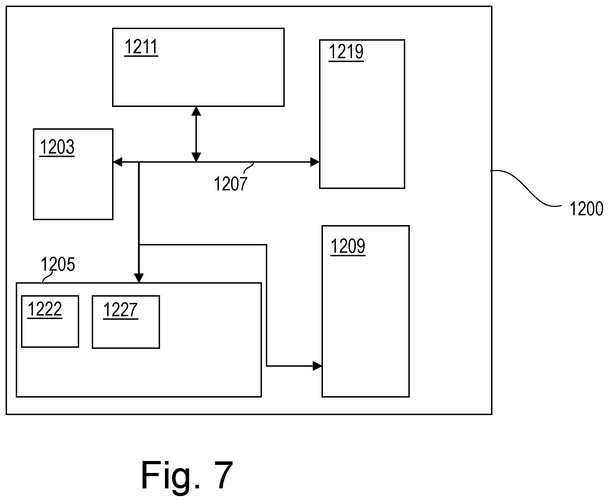

Fig. 7 represents a general computerized system suited for implementing at least part of method steps as involved in the disclosure. Each system of the public system 320, the corporate system 302 and the backend system may, for example, comprise the computer system 1200. The components of the computer system 1200 may include, but are not limited to, one or more processors or processing units 1203, a storage system 1211, a memory system 1205, and a bus 1207 that couples various system components including memory system 1205 to processor 1203. Memory system 1205 may include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), programmable read only memory (PROM). Note that the memory system 1205 may have a distributed architecture, where various components are situated remote from one another, but can be accessed by the processor 1203.

The software in memory system 1205 may include one or more separate programs, each of which comprises an ordered listing of executable instructions for implementing logical functions, notably functions involved in embodiments of this invention. The software in memory system 1205 shall also typically include a suitable operating system (OS) 1222. The OS 1222 essentially controls the execution of other computer programs, such as possibly software 1227 for implementing methods as described herein.

Computer system 1200 may also communicate with one or more external devices such as a keyboard, a pointing device, a display, etc.; one or more devices that enable a user to interact with computer system; and/or any devices (e.g., network card, modem, etc.) that enable computer system 1200 to communicate with one or more other computing systems. Such communication can occur via I/O interface(s) 1219. Still yet, computer system 1200 may communicate with one or more networks such as a local area network (LAN), a general wide area network (WAN), and/or a public network (e.g., the Internet) via network adapter 1209 that may comprise a Wireless and/or mobile network adapter. As depicted, network adapter 1209 communicates with the other components of computer system 1200 via bus 1207.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A `computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

`Computer memory' or 'memory' is an example of a computer-readable storage medium. Computer memory is any memory which is directly accessible to a processor. `Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

## Claims

1. A method for data enablement in a distributed manufacturing automation system (100, 200), the distributed manufacturing automation system (100, 200) being configured as an automation pyramid comprising a plurality of levels, the distributed manufacturing automation system (100, 200) comprising networks (230, 233, 235, 237A, 237B), wherein each network is associated with one level of the automation pyramid, the networks comprising a public network (237B) and at least one corporate network (230, 233, 235, 237A), the method comprising:
receiving (501) at a messaging middleware (325) from a first application (321) of the public network a data access request in a first format;
processing (503) by the messaging middleware (325) the data access request, the processing comprising converting the first format of the data access request into a second format of a second application (306) of a specific corporate network of the at least one corporate network; and sending (505) the data access request in the second format to the second application (306);
processing (507) by the second application (306) the data access request resulting in data;
sending (509) by the second application (306) the resulting data to the first application (321) through the messaging middleware (325).

2. The method of claim 1, the second application being an application programming interface, API, that is configured in accordance with a client server model involving a client application, herein referred to as local client application, and a server application; wherein processing the data access request by the second application comprises:
invoking by the local client application a data access method of the server application;
executing the data access method by the server application; and
receiving by the local client application the resulting data from the server application; wherein the sending of the resulting data to the first application is performed by the local client application.

3. The method of claim 2, the server application being part of the specific corporate network or of another corporate network of the corporate networks.

4. The method of any of the preceding claims 2 to 3, the second application being the application programming interface that is configured in accordance with a client server model involving the first application as a remote client application for the server application.

5. The method of any of the preceding claims 2 to 3, the first application being another application programming interface, API, having endpoints which are compatible with endpoints of the API of the corporate network, the method comprising: receiving by the first application a call of an endpoint of the other API from a user; in response to the call, sending by the first application the data access request to the messaging middleware.

6. The method of any of the preceding claims, further comprising:
applying, by the first application, at least one first authentication test to authenticate a user of the data access request;
sending the data access request to the messaging middleware in case the user is authenticated; and
applying, by the second application, at least one second authentication test to authenticate the user;
performing the processing of the data access request by the second application in case the user is second authenticated.

7. The method of claim 6, wherein applying, by the first application, the at least one first authentication test comprises a step of acquiring or receiving a first authentication token, wherein the first authentication token comprises information required to pass the at least one first authentication test.

8. The method of claim 6 or 7, wherein after passing the at least one first authentication test, the method comprises a step of placing the received first authentication token in a public authentication header in the request message, wherein the method further comprises a step of acquiring or receiving a second authentication token using the public authentication header in the request message, wherein the second authentication token comprises information required to pass the at least one second authentication test.

9. The method of any of the preceding claims, the first application being a proxy server.

10. The method of any of the preceding claims, wherein the public network belongs to the highest level of the automation pyramid.

11. The method of any of the preceding claims, wherein the messaging middleware comprises a message broker.

12. The method of any of the preceding claims, wherein the distributed manufacturing automation system comprises firewalls between levels of the automation pyramid.

13. A computer program product comprising a computer-readable storage medium having computer-readable program code embodied therewith, the computer-readable program code configured to implement the method of any of the claims 1 to 12.

14. A distributed manufacturing automation system (100, 200, 300, 400) being configured as an automation pyramid comprising a plurality of levels, the distributed manufacturing automation system comprising networks (230, 233, 235, 237A, 237B), wherein each network is associated with one level of the automation pyramid, the networks comprising a public network (237B) and at least one corporate network (230, 233, 235, 237A), the distributed manufacturing automation system comprising a messaging middleware (325), the messaging middleware (325) being configured for receiving from a first application (321) of the public network a data access request in a first format; converting the first format of the data access request from into a second format of a second application (306) of a specific corporate network of the corporate network; and sending the data access request in the second format to the second application (306); wherein the second application (306) is configured for processing the data access request resulting in data; and sending the resulting data to the first application (321) through the messaging middleware (325).
